# EUROPÄISCHE PATENTSCHRIFT

(11) **EP 1 707 445 B1**
(45) Veröffentlichungstag und Bekanntmachung des Hinweises auf die Patenterteilung: **02.12.2009**
(21) Anmeldenummer: 06004803.0
(22) Anmeldetag: 09.03.2006
(51) Int. Cl.: B60R 19/56

(54) **Seitliche Schutzvorrichtung für einen Lastkraftwagen**
Side protection device for trucks
Dispositif de protection latérale pour camions

(30) Priorität: 30.03.2005 DE 102005014543
(43) Veröffentlichungstag der Anmeldung: 04.10.2006
(73) Patentinhaber: MAN Nutzfahrzeuge Aktiengesellschaft, 80976 München (DE)
(72) Erfinder: Weißbrodt, Olaf, 80995 München (DE); Best, Dieter, 85298 Scheyern (DE)

(56) Entgegenhaltungen:
- DE-A1- 4 142 804
- DE-A1- 4 143 294
- DE-C1- 19 644 220
- DE-U1- 9 115 125
- GB-A- 2 172 556
- JP-A- 59 020 750

## Beschreibung

Die Erfindung betrifft eine seitliche Schutzvorrichtung für einen Lastkraftwagen nach dem Oberbegriff des Patentanspruches 1.

Eine derartige Schutzvorrichtung ist aus DE 41 42 804 C2 bekannt. Die bekannte Vorrichtun besitzt Seitenschutzelemente in Form von segmentförmigen Abdeckblenden, die an einem aus mehreren vertikalen und horizontal verlaufenden Rohrteilen bestehenden Rahmenrohrgestänge längsverschieblich und höhenverschlieblich durch Aufklippsten befestigt sind. Für die Längsverschiebung und Höhenverschiebung sind ineinander greifende Profilschienen vorgesehen. Um einen Zugang zu von der Schutzvorrichtung verdeckten Anbauteilen am Fahrzeugaufbau zu erlagen, ist es erforderlich, die Abdeckblenden ganz oder teilweise zu entfernen.

Ferner ist es bekannt (DE 199 04 386 A1) die Abdeckblenden klappbar auszugestalten wodurch bei unsachgemäßer Bedienung Unfallgefahr besteht.

Aus der GB-A-2172556 ist bereits eine seitliche Schutzvorrichtung für einen Lastkraftwagen bekannt, welche in einem seitlichen Freiraum unterhalb einer Ladefläche und zwischen den Fahrzeugachsen anzuordnen ist, mit wenigstens zwei sich in Fahrzeuglängsrichtung erstreckenden Seitenschutzplanken als Seitenschutzelement, welche an wenigstens einem am Fahrzeugaufbau befestigten vertikalen Träger höhenverstellbar angeordnet und in zugeordneten separaten Vertikalführungen stufenlos höhenverstellbar geführt sind. Konkret ist hier ein Halter vorgesehen, der an einer den Seitenschutzplanken zugewandten Vorderseite eine Reihe von übereinander angeordneten und voneinander beabstandeten Vertikalschlitzen aufweist. Die Seitenschutzplanken können hier übereinander und beabstandet voneinander an dem Halter angeordnet werden, wozu jede der Seitenschutzplanken mittels einer einen Schraubbolzen aufweisenden Verbindungsplatte an übereinanderliegenden, unterschiedlichen Vertikalschlitzen lösbar befestigt wird. Um eine Höhenverstellbarkeit bzw. eine gewisse Flexibilität in der Höhenverstellbarkeit zu erzielen, ist der Schraubbolzen an der Platte außermittig angebracht, so dass durch Verdrehen der Platte in Verbindung mit der Anzahl der vorgegebenen Vertikalschlitze eine gewisse Höhenverstellbarkeit in Vertikalrichtung gesehen ermöglicht werden soll. Ansonsten sind die einzelnen Seitenschutzplanken, bei einer Verstellung stets abzunehmen und neu anzusetzen bzw. neu zu justieren, was relativ aufwändig ist.

Ein derartiger Aufbau weist eine Vielzahl von einzelnen Bauteilen auf, wobei die einzelnen Seitenschutzplanken bei jeder Höhenanpassung abgenommen und wieder neu angesetzt und insbesondere hinsichtlich der Lochbilder benachbarter vertikaler Träger genau justiert und positioniert werden müssen.

Aus der DE 91 15 125 U1 ist ein Aufbau bekannt, bei dem ein Seitenschutzelement im normalen Betriebszustand mittels einer durch einen Gummikörper und einen Eingriffsbolzen gebildeten Arretiereinrichtung in ihrer vertikalen Schutzposition gehalten. Sobald vom z. B. Fahrer der Zugang zu einem Werkzeugkasten gewünscht wird, kann das Schutzelement aufgeschwenkt werden, in dem an diesem angezogen wird und die Verbindung zwischen Eingriffsbolzen und Gummikörper gelöst wird. Anschießend kann das Schutzelement dann wieder abgeklappt werden, wobei der Gummikörper wieder mit dem Eingriffsbolzen eine Rastverbindung eingeht. Das Seitenschutzelement ist hier über Schieber an einer aufschwenkbaren Stange, die den Gummikörper trägt, höhenverstellbar. Hierzu sind konkret zwei Schieber vorgesehen, die beabstandet übereinander angeordnet sind und die Stange umfassen. Die Festlegung der Schieber erfolgt über eine Schraube.

Die DE 41 42 804 A zeigt lediglich einen Anfahrschutz an Lastkraftwagen, bei dem die in Segmente unterteilten Abdeckblenden an einem unterhalb des Fahrzeugraumes angebrachten Rahmenrohrgestell an zwei daran in verschiedenen Höhen angeordneten, quer verlaufenden Profilschienen befestigt sind, auf die an der Innenseite der Segmente der Abdeckblenden angebrachte federnde Klemmen aufclipsbar sind.

Die DE 41 43 294 A1 zeigt eine seitliche Schutzvorrichtung für Nutzfahrzeuge, bei der zwei Stützen an Querholmen oder an Hauptlängsträgem angeschraubt werden sollen, die allseitig mit durchgehenden Lochreihen versehen sind und mit denen mittels Streben über Schnellverschlüsse die an diesen angeordneten Schutzplanken montiert werden sollen.

Die JP-A-59020750 zeigt lediglich einen Aufbau einer seitlichen Schutzvorrichtung, die pneumatisch verstellt werden kann. Die DE 196 44 220 C1 betrifft einen seitlichen Unterfahrschutz für Nutzfahrzeuge, bei der dieser als Energieabsorber ausgebildet ist.

Es ist daher Aufgabe der vorliegenden Erfindung, eine seitliche Schutzvorrichtung für einen Lastkraftwagen zu schaffen, mit welcher auf baulich einfache Weise eine rasche und sichere Zugänglichkeit zu den im norm Fahrbetrieb von der Schutzvorrichtung verdeckten Rahmenanbauteilen des Fahrzeugs bei verringerter Unfullgefahr in Verbindung mit einer Verlagerungsmöglichkeit von Seitenschutzplanken erzielt werden kann.

Diese Aufgabe wird gelöst mit den Merkmalen des Patentanspruchs 1. Vorteilhafte Weiterbildungen sind Gegenstand der Unteransprüche.

Gemäß Anspruch 1 überlappen sich die Vertikalführungen jedes vertikalen Trägers in ihren vertikalen Ausdehnungen, wobei die Seitenschutzplanken in den Vertikalführungen stufenlos höhenverstellbar geführt sind.

Mit einer derartigen erfindungsgemäßen Überlappung erreicht man eine wesentlich verbesserte universelle Anpassung der Einbauhöhe der seitlichen Schutzeinrichtun an unterschiedliche Fahrzeuge und Reifengrössen und verschiedene Wahlmöglichkeiten sowie genügend Freiraum für die Zugänglichkeit zu den Rahmenbauteilen. Zudem erreicht man auf diese Weise die maximal mögliche Verstellbarkeit der jeweiligen Seitenschutzplanken gegeneinander. Die Seitenschutzplanken können z. B. sowohl in ihren obersten Positionen als auch in ihren untersten Positionen, bei welchen die Unterkante der oberen Seitenschutzplanke auf der Oberkante einer unteren Seitenschutzplanke aufliegt, gebracht werden. Ferner können die Seitenschutzplanken in jeweilige unterschiedliche Zwischenpositionen gebracht werden. Zudem ist es möglich, die Seitenschutzplanken einzeln oder auch gemeinsam in den beiden vertikalen Richtungen nach dem Lösen der Verbindungsmittel zu bewegen. Vorteilhaft kann somit die Höhenverstellung der Seitenschutzplanken und deren Position relativ zueinander auf vielfältigste und vor allem einfachste Weise durch z. B. lediglich Lösen der Schraubverbindungen einer Seitenschutzplanke in der gewünschten Weise verändert bzw. eingestellt werden. Dabei werden die Seitenschutzplanken stets im Bereich des vertikalen Trägers gehalten und brauchen daher nicht abgenommen und wieder neu angesetzt zu werden.

Die Seitenschutzplanken sind bei einer bevorzugten Ausführungsform der Erfindung mit lösbaren Verbindungsmitteln in den Vertikalenführungen verschiebbar geführt. Als lösbare Verbindungsmittel können Schraubenverbindungen zum Einsatz kommen. Die Vertikalführungen können als Langlöcher ausgebildet sein, durch welche die Verbindungsmittel hindurchragen. Bei Verwendung von Schraubenverbindungen ragen die Schäfte der Schrauben durch die Langlöcher.

Die Seitenschutzplanken weisen längsverlaufende Eingriffstellen für die Verbindungsmittel, insbesondere in Form von Nuten auf. Bei Verwendung von Verbindungsmittel in Form von Schraubenverbindungen, insbesondere Kopfschrauben, ragt das Kopfprofil in einen erweiterten Bereich der Nut und der Schaft der Schraube erstreckt sich durch einen engen Nutbereich, welcher etwa dem Durchmesser des Schraubenschaftes angepasst ist.

Die jeweiligen Seitenschutzplanke kann in bevorzugter Weise als Hohlprofil ausgebildet sein.

Die Erfindung ist nicht nur anwendbar bei Lastkraftwagen und Trailern, sondern auch bei Anhängern von Lastkraftwagen.

Anhand der Figuren wird an einem Ausführungsbeispiel die Erfindung noch näher erläutert.

Es zeigt:
- Figur 1: In Seitenansicht die Rückseite eines Ausführungsbeispiels für die Schutzvorrichtung,
- Figur 2: eine schnittbildliche Darstellung des in Figur 1 dargestellten Ausführungsbeispiels mit einer Halteeinrichtung, mit welcher das Ausführungsbeispiel am Fahrzeugrahmen befestigt ist, und
- Figur 3: in vergrößerter Darstellung einen Ausschnitt bei A in Figur 2.

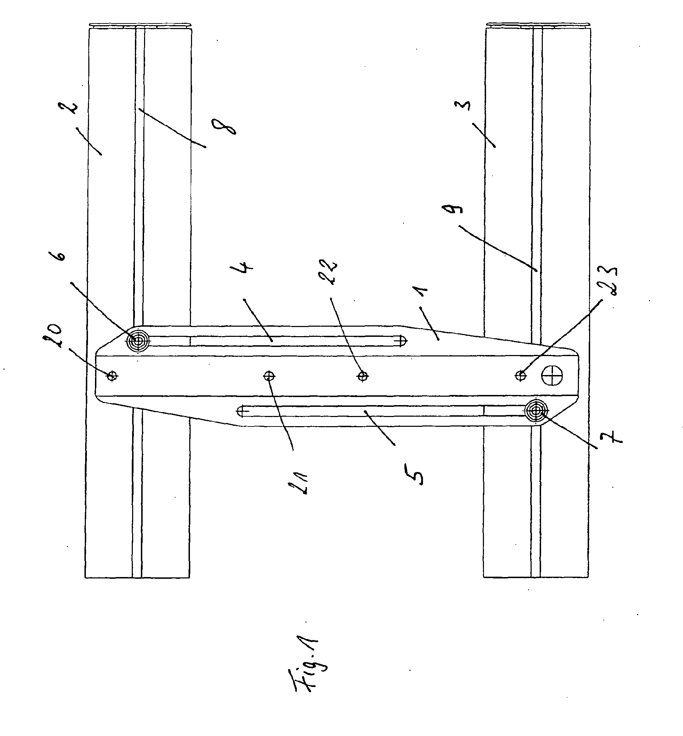

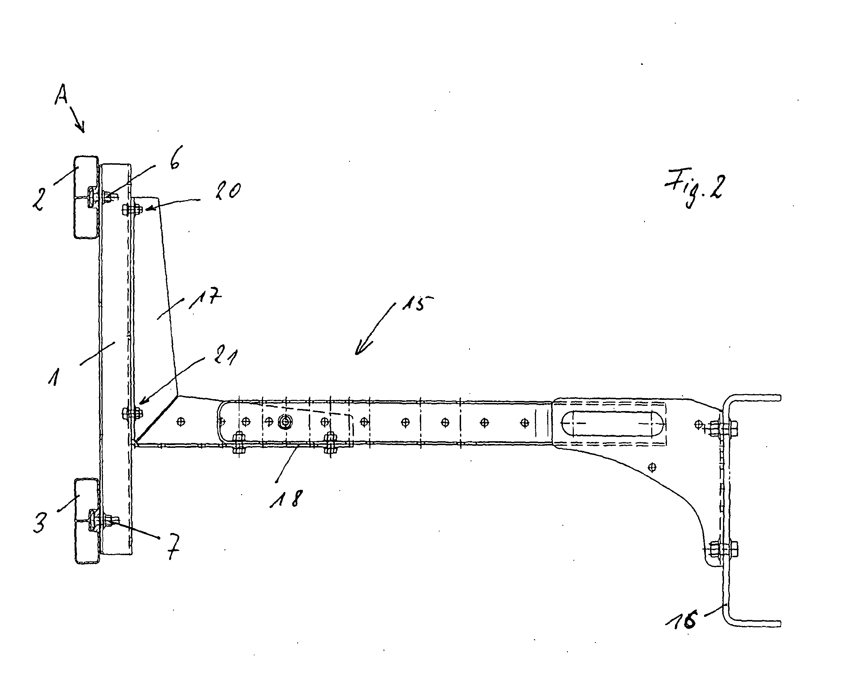

Das dargestellte Ausführungsbeispiel beinhaltet einen vertikalen Träger 1, welcher über einen L-förmigen Halter 15 am Fahrzeugaufbau 16 befestigt ist (Figur 2). Der vertikale Träger 1 ist hierzu an einem vertikalen Halterschenkel 17 des Halters 15 in Verbindungsstellen 20, 21 befestigt. Es handelt sich hier um obere Verbindungsstellen 20 und 21. Es ist auch möglich, den vertikalen Träger 1 in unteren Verbindungsstellen 22, 23 (Figur 1) am Halter 15 zu befestigen. Ein horizontaler Halterschenkel 18 des Halters 15 erstreckt sich quer zur Fahrzeuglängsrichtung und verbindet den vertikalen Halterschenkel 17 mit dem Fahrzeugaufbau 16. Der horizontale Halterschenkel 18 kann in seiner Länge verstellt werden. Auf diese Weise ist die seitliche Positionierung des vertikalen Trägers 1 an die Fahrzeugbreite anpassbar.

Der vertikale Träger 1 ist als Schiene ausgebildet und besitzt Vertikalführungen 4 und 5. Beim dargestellten Ausführungsbeispiel sind 2 Vertikalführungen 4 und 5 in Form von vertikal sich erstreckenden Langlöchern oder Schlitzen vorgesehen. In diesen Vertikalführungen sind mit Hilfe von Verbindungsmitteln 6, 7, welche als Schraubenverbindungen beim darstellten Ausführungsbeispiel ausgebildet sind, Seitenschutzplanken 2, 3, welche sich in Fahrzeuglängsrichtung erstrecken, befestigt. Beim dargestellten Ausführungsbeispiel sind zwei Seitenschutzplanken 2, 3 vorgesehen, wobei jede Seitenschutzplanke in einer ihr zugeordneten Vertikalführung 4, 5 separat am vertikalen Träger 1 befestigt ist. In Einbaulage sind die Seitenschutzplanken 2, 3 fest mit dem vertikalen Träger 1 verbunden. In bevorzugter Weise werden zwei vertikale Träger verwendet, in denen für die jeweiligen Seitenschutzplanken 2, 3 separate Vertikalführungen 4, 5 vorgesehen sind. Beim Lösen der Verbindungsmittel 6, 7 können die Verbindungsmittel und damit die Seitenschutzplanken 2, 3 in vertikaler Richtung in den Vertikalführungen 4, 5 stufenlos verschoben werden.

Neben der Schaffung einer schnellen Zugängigkeit zu hinter den Seitenschutzplanken 2, 3 liegenden Rahmenbauteilen des Fahrzeugs, erreicht man eine universelle Anpassung der Einbauhöhe der seitlichen Schutzeinrichtung an unterschiedliche Fahrzeuge und Reifenhöhen. In Verbindung mit dem in seiner Länge verstellbaren Halter 15 ist, wie oben schon erläutert wurde, auch eine Anpassung an die Fahrzeugbreite bei der Positionierung der Seitenschutzplanken 2, 3 möglich.

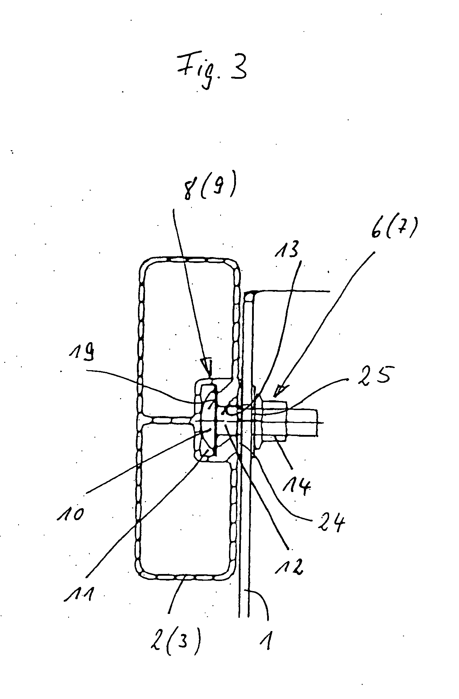

Ferner sind bei gelösten Verbindungsmitteln 6, 7 die Seitenschutzplanken in Fahrzeuglängsrichtung verschiebbar am vertikalen Träger 1 bzw. an den vertikalen Trägern 1 angeordnet. Hierzu sind in Form von längsverlaufenden Nuten 8, 9 an den Seitenschutzplanken 2, 3 Eingriffstellen für die Verbindungsmittel 6, 7, insbesondere Schraubenverbindungen vorsehen. In Figur 3 ist in vergrößerter Darstellung der Eingriff eines Verbindungsmittels 6, 7 in einer der Nuten 8, 9 dargestellt. Die jeweilige Nut 8, 9 beinhaltet einen erweiterten Nutbereich 11, in welchem ein Schraubenkopf 10 der Kopfschraube, welche das Verbindungsmittel 6, 7 bildet, angeordnet ist. Ein Schraubenschaft 12 erstreckt sich durch einen engen Nutbereich 13. Der Schraubenschaft 12 ist ferner durch das die Vertikalführung 4 bzw. 5 bildende Langloch im vertikalen Träger 1 hindurch gesteckt und auf ein Schraubengewinde des hindurchgesteckten Schraubenschaftes 12 ist eine Schraubenmutter 14 aufgesetzt. Beim Festziehen der so gebildeten Schraubenverbindung kann die Seitenschutzplanke 2 bzw. 3 am vertikalen Träger 1 befestigt werden. Hierbei liegt der Schraubenkopf 10 an einer zwischen dem engen Nutbereich 13 und dem erweiterten Nutbereich 11 gebildeten Schulter 19, welche um den Schraubenschaft 12 verläuft an. Nach dem Lösen der Schraubenverbindung kann, wie schon erläutert, die Seitenschutzplanke 2 bzw. 3 in ihrer Höhe in der Vertikalführung 4 bzw. 5 verstellt werden. Ferner ist es möglich, die Seitenschutzplanke in der längsverlaufenden Nut 8 bzw. 9 in Fahrzeuglängsrichtung zu verschieben. Zwischen der Seitenschutzplanke 2 bzw. 3 und dem vertikalen Träger 1 befindet sich eine den Schraubenschaft 12 umfassende Kunststoffscheibe 24. Ferner befindet sich zwischen dem vertikalen Träger 1 und der Schraubenmutter 14 eine weitere Kunststoffscheibe 25, welche den Schraubenschaft 12 umgibt. Die Kunststoffscheiben 24 und 25 bilden einen Korrisionsschutz und erleichtern die Verschiebebewegungen der Seitenschutzplanken 2, 3 gegenüber dem jeweiligen vertikalen Träger 1.

Wie aus Figur 2 zu ersehen ist, überlappen sich die Vertikalführungen 4, 5 für die jeweiligen Seitenschutzplanken. Auf diese Weise erreicht man die maximal mögliche Verstellbarkeit der jeweiligen Seitenschutzplanken 2 und 3 gegeneinander. Die Seitenschutzplanken können somit sowohl in ihren obersten Positionen als auch in ihre untersten Positionen, bei welchen die Unterkante der oberen Seitenschutzplanke 2 auf der Oberkante der unteren Seitenschutzplanke 3 aufliegt, gebracht werden. Ferner können die Seitenschutzplanken in jeweilige Zwischenpositionen gebracht werden. Es ist möglich, die Seitenschutzplanken einzeln oder auch gemeinsam in den beiden vertikalen Richtungen nach dem Lösen der Verbindungsmittel 6, 7 zu bewegen. In den obersten Positionen können die Seitenschutzplanken 2, 3 nach dem Verschieben durch Anziehen der Schraubenverbindungen der unten liegenden Seitenschutzplanke 3 an den Trägern 1 fixiert werden. In der untersten Position werden die Seitenschutzplanken 2, 3 durch Auflage der Schraubenverbindungen, insbesondere der Schraubenschäfte 12 an den unteren Enden der Vertikalführungen 5 für die untere Seitenplanke 3 an den Trägern 1 gehalten.

Die Verbindungsmittel 6, 7 dienen somit nicht nur zur Befestigung der Seitenschutzplanken 2, 3 am vertikalen Träger 1, sondern wirken nach ihrem Lösen in Verbindung mit den, insbesondere schlitzförmig oder langlochförmig ausgebildeten Vertikalführungen 4, 5 als Führungselemente beim vertikalen Verschieben der Seitenschutzplanken.

## Patentansprüche

1. Seitliche Schutzvorrichtung für einen Lastkraftwagen, welche in einem seitlichen Freiraum unterhalb einer Ladefläche und zwischen den Fahrzeugachsen anzuordnen ist, mit wenigstens zwei sich in Fahrzeuglängsrichtung erstreckenden Seitenschutzplanken (2, 3) als Seitenschutzelement, welche an wenigstens einem am Fahrzeugaufbau befestigten vertikalen Träger (1) höhenverstellbar angeordnet und in zugeordneten separaten Vertikalführungen (4, 5) höhenverstellbar geführt sind, **dadurch gekennzeichnet, dass** sich die Vertikalführungen (4, 5) jedes vertikalen Trägers (1) in ihren vertikalen Ausdehnungen überlappen, wobei die Seitenschutzplanken (2, 3) in den Vertikalführungen stufenlos höhenverstellbar geführt sind.

2. Schutzvorrichtung nach Anspruch 1, **dadurch gekennzeichnet, dass** die Seitenschutzplanken (2, 3) mit lösbaren Verbindungsmitteln (6, 7) in den Vertikalführungen (4, 5) verschiebbar geführt sind.

3. Schutzvorrichtung nach Anspruch 1 oder 2, **dadurch gekennzeichnet, dass** die Vertikalführungen (4, 5) als Langlöcher oder Schlitze im Trägermaterial des vertikalen Trägers (1) ausgebildet sind.

4. Schutzvorrichtung nach Anspruch 2 und 3, **dadurch gekennzeichnet, dass** die Verbindungsmittel (6, 7) durch die so ausgebildeten Vertikalführungen ragen.

5. Schutzvorrichtung nach einem der Ansprüche 1 bis 2, **dadurch gekennzeichnet, dass** die Verbindungsmittel (6, 7) als Schraubenverbindungen, mit insbesondere Kopfschrauben ausgebildet sind.

6. Schutzvorrichtung nach einem der Ansprüche 1 bis 4, **dadurch gekennzeichnet, dass** die Seitenschutzplanken (2, 3) längsverlaufende Nuten (8, 9) aufweisen, in welche die Verbindungsmittel (6, 7) eingreifen.

7. Schutzvorrichtung nach Anspruch 6, **dadurch gekennzeichnet, dass** das jeweilige Verbindungsmittel (6, 7) in einen erweiterten Nutbereich (11), insbesondere mit einem Schraubenkopf (10) eingreift.

8. Schutzvorrichtung nach einem der Ansprüche 1 bis 7, **dadurch gekennzeichnet, dass** die jeweilige Seitenschutzplanke (2, 3) als Hohlprofil ausgebildet ist.

9. Schutzvorrichtung nach einem der Ansprüche 1 bis 8, **dadurch gekennzeichnet, dass** zwei vertikale Träger (1) vorgesehen sind.

10. Schutzvorrichtung nach einem der Ansprüche 2 bis 9, **dadurch gekennzeichnet, dass** zwischen der Seitenschutzplanke (2, 3) und dem vertikalen Träger (1) sowie zwischen dem vertikalen Träger (1) und einer Schraubenmutter (14) des als Schraubenverbindung ausgebildeten Verbindungsmittels (6, 7), Kunststoffscheiben (24, 25) angeordnet sind.

## Claims

1. Side protection device for trucks positioned in a free space at the side under a loading surface and between the vehicle axles, with at least two side protection rails (2, 3) as a side protection element extending in longitudinal direction along the side of the vehicle, whereby said rails are height-adjustable and are mounted on at least one vertical support (1) attached to the vehicle body and are guided with height adjustment capability in separately assigned vertical guides (4, 5), **characterised in that** the vertical guides (4, 5) of each vertical support (1) overlap in their vertical elongations, whereby the side protection rails (2, 3) are guided in the vertical guides with continuous height adjustment.

2. Side protection device in accordance with Claim 1, **characterised in that** the side protection rails (2, 3) with detachable fasteners (6, 7) are slidable in the vertical guides (4, 5).

3. Side protection device in accordance with Claim 1 or 2, **characterised in that** the vertical guides (4, 5) are designed as oblong holes or slots in the base material of the vertical support (1).

4. Side protection device in accordance with Claims 2 and 3, **characterised in that** the fasteners (6, 7) protrude through the vertical guides realised in this way.

5. Side protection device in accordance with one of Claims 1 to 2, **characterised in that** the fasteners (6, 7) are designed as screw connections, in particular with cap screws.

6. Side protection device in accordance with one of Claims 1 to 4, **characterised in that** the side protection rails (2, 3) have grooves running longitudinally (8, 9) into which the fasteners (6, 7) engage.

7. Side protection device in accordance with Claim 6, **characterised in that** the respective fastener (6, 7) engages in an extended groove area (11), in particular with a screw head (10).

8. Side protection device in accordance with one of Claims 1 to 7, **characterised in that** the respective side protection rail (2, 3) is designed as a hollow profile.

9. Side protection device in accordance with one of Claims 1 to 8, **characterised in that** two vertical supports (1) are provided.

10. Side protection device in accordance with one of Claims 2 to 9, **characterised in that** plastic washers (24, 25) are attached between the side protection rail (2, 3) and the vertical support (1) as well as between the vertical support (1) and a nut (14) of the fastener (6, 7) realised as a screw connection.

## Revendications

1. Dispositif de protection latérale pour camions à disposer dans un espace libre en dessous d'un plateau de chargement et entre les essieux du véhicule avec au moins deux panneaux de protection latérale (2, 3) s'étendant dans le sens longitudinal du véhicule comme éléments de protection latérale, qui sont disposés de manière réglable en hauteur sur au moins un support (1) vertical fixé sur la carrosserie du véhicule et guidés de manière réglable en hauteur dans des guidages verticaux (4, 5) séparés correspondants, **caractérisé en ce que** les guidages verticaux (4, 5) de chaque support vertical (1) se chevauchent dans leurs extensions verticales, les panneaux de protection latérale (2,3) étant guidés de manière progressivement réglable en hauteur dans les guidages verticaux.

2. Dispositif de protection selon la revendication 1, **caractérisé en ce que** les panneaux de protection latérale (2, 3) sont guidés de manière déplaçable dans les guidages verticaux (4, 5) au moyen d'éléments de liaison amovibles (6, 7).

3. Dispositif de protection selon la revendication 1 ou 2, **caractérisé en ce que** les guidages verticaux (4, 5) sont configurés sous forme de trous oblongs ou de fentes dans le matériel de base du support vertical (1).

4. Dispositif de protection selon les revendications 2 et 3, **caractérisé en ce que** les éléments de liaison (6, 7) traversent les guidages verticaux configurés de cette manière.

5. Dispositif de protection selon une des revendications 1 à 2, **caractérisé en ce que** les éléments de liaison (6, 7) sont configurés sous forme d'assemblages à vis comportant en particulier des vis à tête.

6. Dispositif de protection selon une des revendications 1 à 4, **caractérisé en ce que** les panneaux de protection latérale (2, 3) présentent des rainures (8, 9) s'étendant dans le sens longitudinal dans lesquelles les éléments de liaison (6, 7) s'engagent.

7. Dispositif de protection selon la revendication 6, **caractérisé en ce que** l'élément de liaison (6, 7) correspondant s'engage dans une zone élargie de la rainure (11), en particulier avec une tête de vis (10).

8. Dispositif de protection selon une des revendications 1 à 7, **caractérisé en ce que** le panneau de protection latérale (2, 3) concerné est configuré sous forme de profilé creux.

9. Dispositif de protection selon une des revendications 1 à 8, **caractérisé en ce que** deux supports verticaux (1) sont prévus.

10. Dispositif de protection selon une des revendications 2 à 9, **caractérisé en ce que** des rondelles en matière synthétique (24, 25) sont disposées entre le panneau de protection latérale (2, 3) et le support vertical (1) ainsi qu'entre le support vertical (1) et un écrou (14) de l'élément de liaison (6, 7) configuré sous forme d'assemblage à vis.
